# FASCICULE DE BREVET EUROPEEN

(11) **EP 1 065 830 B1**
(45) Date de publication et mention de la délivrance du brevet: **28.06.2006**
(21) Numéro de dépôt: 00410051.7
(22) Date de dépôt: 15.05.2000
(51) Int. Cl.: H04L 12/28

(54) **Système de configuration pour installation domotique**
System zur Konfigurierung eines Hausnetzs
Configuration system for domestic network

(30) Priorité: 28.06.1999 FR 9908421
(43) Date de publication de la demande: 03.01.2001
(73) Titulaire: SCHNEIDER ELECTRIC INDUSTRIES SAS, 92500 Rueil-Malmaison (FR)
(72) Inventeur: Perrin, Alain, 38050 Grenoble Cedex 09 (FR)
(74) Mandataire: Jouvray, Marie-Andrée

(56) Documents cités:
- EP-A- 0 549 005
- WO-A-86/06890
- US-A- 5 301 051
- US-A- 5 352 957
- ANONYMOUS: "Wireless Connection Between a Controller and a Plurality of Terminals. December 1977." IBM TECHNICAL DISCLOSURE BULLETIN, vol. 20, no. 7, 1 décembre 1977 (1977-12-01), page 2843 XP002131438 New York, US

## Description

L'invention concerne un dispositif de communication, définie dans la revendication 1, comportant un dispositif de configuration pour installation domotique comportant des modules de communication reliés par des premiers moyens de communication et associés à des organes de commande et à des appareils électriques, ainsi qu'une installation comportant un tel dispositif de configuration, définie dans la revendication 7, ou configurée par un tel dispositif, définie dans la revendication 8, et un procédé de configuration d'une installation domotique définie dans la revendication 9.

Dans les installations traditionnelles, les liens entre un organe de commande tel qu'un interrupteur et une charge, par exemple, une lampe, se font par un câblage. Dans ce cas, un câble amène un courant électrique à la lampe lorsque l'interrupteur est fermé.

Afin d'optimiser le câblage des installations, des modules de communication sont associés à des organes de commande et à des charges ou des récepteurs électriques. Ainsi, tous les appareils récepteurs électriques ou les charges peuvent être connectés à un même câble électrique d'alimentation. Les modules de communication associés aux appareils électriques sont reliés par un bus de communication pour envoyer ou recevoir des ordres de commande ou des informations.

Pour associer des appareils électriques entre eux, par exemple un interrupteur avec une lampe, il est nécessaire de configurer les modules de communication. Il existe plusieurs sortes de configuration, notamment l'attribution d'adresses aux modules de communication. Ces adresses peuvent être fournies à l'aide de commutateurs, de roues codeuses, ou de mémoires pré-enregistrées. D'autres méthodes de configuration consistent à équiper les modules de communication de boutons poussoirs qui sont actionnés simultanément ou séquentiellement lors de la phase de configuration. Dans une demande de brevets WO86/06890, un contrôleur portable sans fil communique avec un module de communication servant de relais à un système de communication filaire pour contrôler l'état des différents modules et leurs adresses préprogrammées. Dans une demande de brevet EP0549005, une unité de commande à distance émet des signaux directionnels pour produire un signal de liaison.

Cependant, de tels dispositifs de configuration nécessitent un accès physique à chaque appareil. Par exemple, la configuration d'un interrupteur et d'une lampe doit se faire en adaptant l'adresse du module associé à l'interrupteur avec l'adresse du module associé à la lampe. Dans ce cas, la configuration est longue et peu pratique lorsque les modules ne sont pas facilement accessibles.

L'invention a pour but un dispositif de communication comportant un dispositif et un procédé de configuration pour installation domotique permettant une association simple et rapide de modules de communication associés à des organes de commande et des appareils électriques, ainsi qu'une installation comportant un tel dispositif de configuration ou configurée par un tel dispositif, et un procédé de configuration d'une installation domotique simple et rapide.

L'émetteur de configuration est connecté aux premiers moyens de configuration pour émettre un ordre de configuration.

Notamment, l'émetteur de configuration émet un signal de rayonnement confiné et envoie sur les premiers moyens de communication un signal comportant une information représentative d'une zone de confinement lors de la configuration.

Un dispositif de communication selon l'invention, est défini dans la revendication 1.

Avantageusement, le signal de rayonnement confiné est un signal ayant une longueur d'onde proche ou dans l'ultraviolet.

Dans un mode de réalisation particulier, le signal de rayonnement confiné est émis par un émetteur associé à un module de communication d'un organe de commande ou d'un appareil électrique.

Dans un mode de réalisation préférentiel, le signal de rayonnement confiné est émis par un émetteur portatif ou amovible.

De préférence, des modules de communication sont pré-configurés et la phase de configuration avec un émetteur de configuration termine la configuration à l'intérieur d'une zone de confinement.

Une installation électrique, comportant un dispositif de communication comportant des modules de communication reliés par des premiers moyens de communication et associés à des organes de commande et à des appareils électriques, selon un mode de réalisation de l'invention comporte au moins un dispositif de configuration tel que décrit ci-dessus.

Une installation électrique, comportant un dispositif de communication comportant des modules de communication reliés par des premiers moyens de communication et associés à des organes de commande et à des appareils électriques, selon un mode de réalisation de l'invention comporte des récepteurs aptes à recevoir un signal de rayonnement confiné et est configurée par au moins un dispositif de tel que décrit ci-dessus.

Un procédé de configuration d'une installation domotique selon l'invention, comportant des modules de communication reliés par des premiers moyens de communication et associés à des organes de commande et des appareils électriques, comporte :
- une étape de commande de l'émission d'un signal de rayonnement confiné émis par un émetteur de configuration sur des seconds moyens de communication.
- une étape de réception du signal de rayonnement confiné par des modules de communication,
- une étape d'envoi par l'émetteur de configuration sur les premiers moyens de communication d'un signal d'identification d'un local où se produit le rayonnement confiné, et
- une étape de mémorisation dans des modules de communication d'une information d'identification de local envoyée par l'émetteur de configuration.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- La figure 1 représente le schéma simplifié d'une installation domotique de l'art antérieur,
- la figure 2 représente le schéma d'une installation comportant un dispositif de configuration selon un premier mode de réalisation de l'invention,
- la figure 3 représente le schéma d'une installation comportant un dispositif de configuration selon un second mode de réalisation de l'invention,
- la figure 4 représente un dispositif comportant un émetteur de configuration susceptible d'émettre un signal confiné et de module pouvant recevoir ledit signal,
- la figure 5 représente des adresses de modules de communication d'un dispositif selon un mode de réalisation de l'invention.

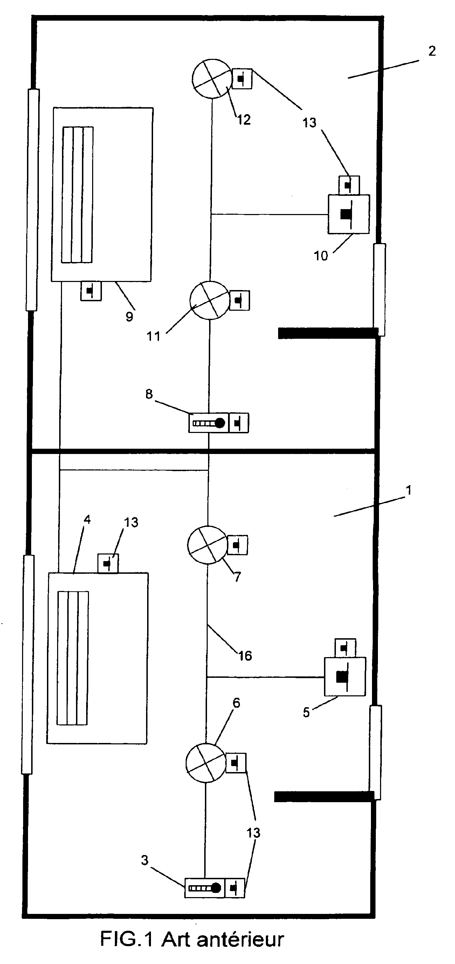

Une installation comportant des appareils électriques munis de modules de communication est représentée sur la figure 1. Dans cette installation, des appareils sont installés dans une première pièce 1 et une seconde pièce 2. Par exemple, un thermostat 3 commande un appareil de chauffage 4 et un bouton-poussoir 5 commande des lampes 6 et 7 de la pièce 1, et un thermostat 8 commande un appareil de chauffage 9 et un bouton-poussoir 10 commande des lampes 11 et 12 de la pièce 2.

Selon un mode de réalisation connu, les appareils électriques comportent des modules de communication ayant un bouton-poussoir 13 de configuration. Les modules de communication sont reliés par un premier réseau de communication, par exemple un bus filaire ou des courants porteurs. Lors d'une phase de configuration, les boutons-poussoirs 13 sont actionnés séquentiellement ou simultanément pour associer les appareils électriques entre eux. Par exemple, les boutons-poussoirs 13 du thermostat 3 et de l'appareil 4 sont actionnés pour effectuer la configuration et associer la commande de l'appareil 4 par le thermostat 3.

Ce mode de configuration est long et peu pratique, surtout lorsque les appareils ne sont pas d'un accès facile comme des lampes situées au plafond.

Dans un dispositif de configuration selon un mode de réalisation de l'invention, des seconds moyens de communication permettent la configuration des modules associés aux appareils électriques. Les seconds moyens de communication comportent au moins un émetteur de configuration susceptible d'émettre un signal 40 de rayonnement confiné dans un local pendant une phase de configuration et des récepteurs aptes à recevoir ledit signal 40 de rayonnement confiné.

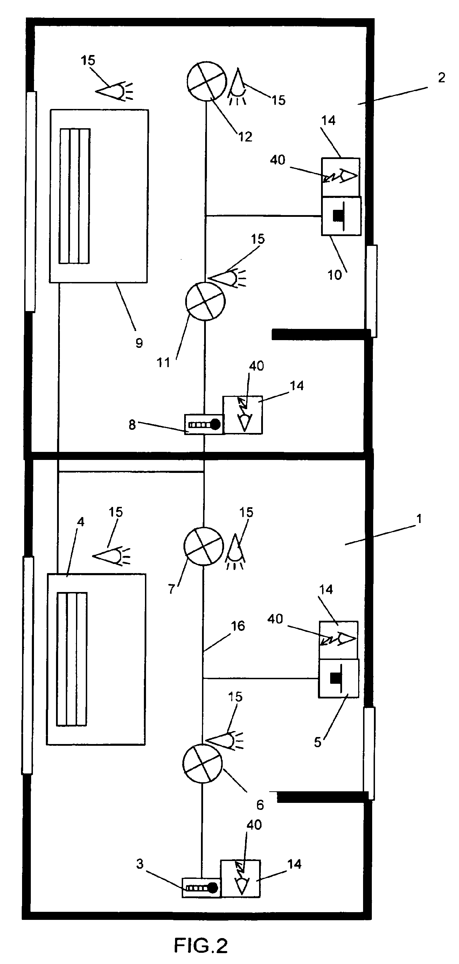

Dans l'installation de la figure 2, des émetteurs de configuration 14 sont associés aux thermostats 3 et 8 et aux boutons-poussoirs de commande 5 et 10. Pour la réception de signaux 40 de rayonnement confiné, des récepteurs de configuration 15 sont associés aux modules des appareils électriques de chauffage 4 et 9 et des lampes 6, 7, 11 et 12. Ainsi, les émetteurs de configuration sont de préférence associés à des organes de commande et les récepteurs de configuration sont de préférence associés à des charge ou des récepteurs électriques

Lors de la phase de configuration, par exemple dans la pièce 1, une action sur l'émetteur 14 du thermostat 3 produit le rayonnement d'un signal 40 confiné à ladite pièce 1 et le récepteur 15 de l'appareil 4 reçoit le signal 40 confiné. En même temps, l'émetteur 14 du thermostat 3 informe à travers un réseau de communication 16 que la phase de configuration est activée et que des appareils de chauffage sont associés avec des thermostats. Puisque le signal confiné est limité à la pièce 1, le thermostat 3 est associé à l'appareil 4.

De même, une action sur l'émetteur 14 du bouton-poussoir de commande 5 produit l'émission ou le rayonnement d'un signal confiné à la pièce 1 et les récepteurs 15 des lampes 6 et 7 reçoivent ledit signal confiné. Ainsi, les lampes 6 et 7 sont automatiquement associées au bouton-poussoir 5 puisqu'un signal sur le réseau 16 informe que le bouton-poussoir va être associé à des lampes dont le récepteur 15 reçoit le signal 40 de configuration confiné des second moyens de communication.

Dans la pièce 2, la configuration se fait automatiquement de la même manière. Les émetteurs 14 du thermostat 8 et du bouton-poussoir 10 envoient un signal 40 de rayonnement confiné à la pièce 2.

Le signal de rayonnement 40 émit par les émetteurs 14, est par exemple, un signal à ultrasons, à infrarouge ou à ultraviolet, selon la perméabilité des parois des pièces où le confinement doit être assuré. Par exemple, si les parois sont en verre, il est avantageux d'utiliser un rayonnement ultraviolet qui est arrêté par ce type de paroi plutôt qu'un rayonnement à infrarouge.

Afin d'éviter une augmentation du coût de l'installation, il est préférable de limiter le nombre d'émetteurs de configuration. Par exemple, un seul émetteur par pièce peut être installé. Il est également avantageux de rendre un émetteur amovible et de le déplacer pièce par pièce au cours de la phase de configuration.

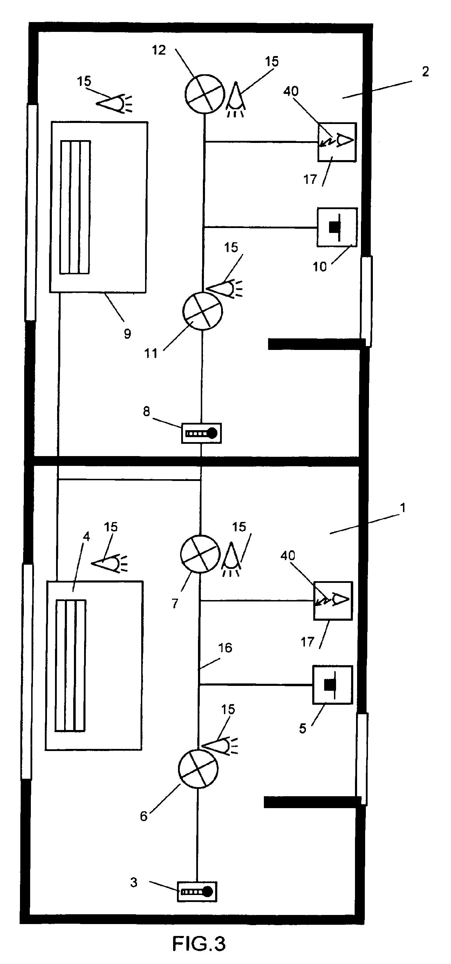

Sur l'installation de la figure 3, un émetteur 17 est utilisé dans chaque pièce. Cet émetteur peut être fixe ou amovible et périodiquement connecté au réseau 16 pour la configuration limitée à une pièce ou un local.

Une action sur l'émetteur 17 suivie d'une commande du thermostat 3 associe ledit thermostat 3 à l'appareil de chauffage 4 qui est dans la même pièce que le signal 40 confiné émis par l'émetteur 17. Le signal émis dans la pièce 1 n'est pas reçu par les récepteurs de la pièce 2 et par conséquent le thermostat 3 n'est pas associé à l'appareil 9.

Lorsque l'émetteur 17 de la pièce 2 est actionné et qu'une commande du bouton-poussoir 10 se produit pendant la phase de configuration, les lampes 11 et 12 qui reçoivent le signal confiné sont associées aux commandes du bouton-poussoir 10. Les lampes 6 et 7 de la pièce 1 ne sont pas concernées par ces commandes puisqu'elles ne reçoivent pas le signal confiné à la pièce 2.

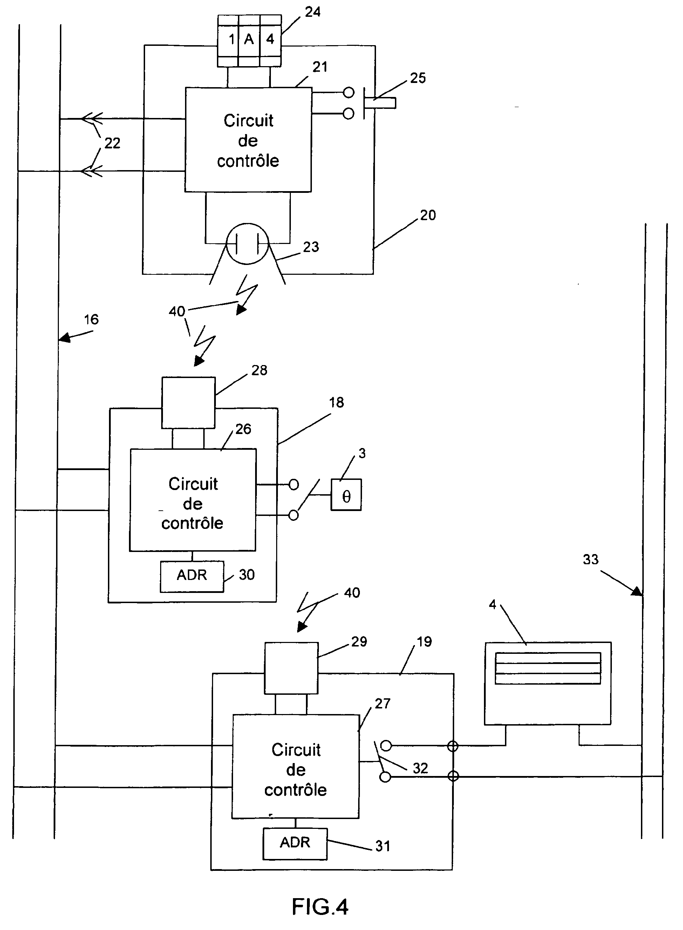

La figure 4 montre un autre mode de réalisation d'une partie d'une installation avec un dispositif selon un mode de réalisation de l'invention. Dans ce cas, les appareils récepteurs tels que les lampes ou les appareils de chauffage et les organes de commande tels que les thermostats et les boutons-poussoirs ont des récepteurs ou des détecteurs de signal 40 confiné. Sur le schéma de la figure 4, un thermostat 3 a un module de communication associé 18 connecté au réseau de communication 16, un appareil de chauffage 4 a un module de communication associé 19 relié au réseau de communication 16, et un émetteur de configuration 20 qui peut être amovible et connecté au réseau de communication 16.

Dans ce mode de réalisation il suffit d'actionner l'émetteur 20 dans un local pour que le thermostat du local soit associé à l'appareil de chauffage et que les boutons-poussoirs de commande soient associés aux appareils d'éclairage du local.

Un émetteur 20 amovible, par exemple comme celui de la figure 4, comporte un circuit de contrôle 21 pouvant être connecté au réseau 16 à travers des prises 22, un dispositif émetteur de rayonnement 23, un dispositif 24 de paramétrage du local par exemple des roues codeuses et un dispositif 25 de commande du rayonnement.

Lorsqu'un utilisateur souhaite configurer un local ou une pièce, il connecte l'émetteur 20 au réseau 16, il paramètre l'identification du local avec le dispositif 24, puis il actionne le dispositif 25 pour commander la configuration. Le circuit de contrôle 21 commande alors le dispositif émetteur 23 pour émettre un rayonnement confiné, et envoie sur le réseau 16 un signal de mise en configuration avec un signal représentatif de paramètres d'identification du local.

Les modules de communication 18 et 19 comportent des circuits de contrôle respectivement 26 et 27, des dispositifs de réception respectivement 28 et 29 et des dispositifs de mémorisation 30 et 31 connectés aux circuits de contrôle pour mémoriser des informations de mémorisation tels que les adresses des modules des appareils auxquels ils sont associés. Le thermostat 3 est connecté à une entrée du circuit de contrôle 26 et le circuit de contrôle 27 a une sortie qui commande un contact 32 pour commander l'alimentation de l'appareil 4 connecté à un réseau de distribution électrique 33.

Les dispositifs de mémorisation peuvent être de préférence préconfigurés de manière à associer à l'avance des types d'organes de commande avec des types d'appareils récepteurs. Par exemple, les modules de thermostat peuvent être préconfigurés pour ne commander que des modules d'appareils de chauffage et les modules d'appareils de chauffage peuvent être préconfigurés pour détecter des ordres de commande provenant de modules de thermostat. Le même type de pré-configuration peut être effectué entre les modules des boutons-poussoirs de commande d'éclairage et les modules des appareils d'éclairage ou des lampes. Dans la phase de configuration un signal représentatif du local permet de compléter ou de déterminer la configuration en associant des modules de communication d'un même local.

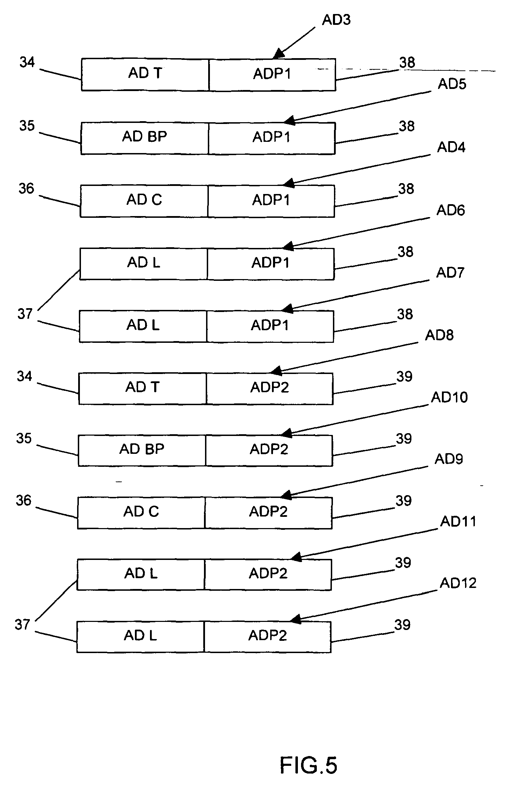

La figure 5 montre des adresses des modules des appareils électriques et des organes de commande, par exemple ceux de la figure 3. Ainsi, des adresses AD3, AD4, AD5, AD6, AD7, AD8, AD9, AD 10, AD 11 et AD 12 peuvent être représentatives des adresses des modules des organes et des appareils respectivement 3, 4, 5, 6, 7, 8, 9, 10, 1 et 12.

Ces adresses comportent une première partie de pré-configuration et une seconde partie qui complète la configuration lors de la phase de configuration au moyen d'un émetteur de configuration 20. Une première partie 34 correspond à la pré-configuration de thermostat, une première partie 35 correspond à une pré-configuration de boutons-poussoirs, une première partie 36 correspond à un pré-configuration d'appareils de chauffage, et une première partie 37 correspondant à une pré-configuration de lampes ou d'appareils de chauffage. Une seconde partie 38 correspond à une configuration des modules de la pièce 1, et une seconde partie 39 correspond à une configuration des modules de la pièce 2.

Une pré-configuration par type d'appareils ou d'organes de commande permet une phase de configuration très rapide. En effet, il suffit de connecter l'émetteur de configuration au réseau de communication et d'actionner la configuration pour que tous les appareils recevant le signal de rayonnement confiné soient configurés en même temps. Il n'y a pas d'intervention sur les appareils, l'installateur n'a pas à se préoccuper du lien logique entre les modules de communication.

Dans les modes de réalisation décrits ci-dessus, deux types de commandes ont été montrés, notamment la commande d'appareils de chauffage et la commande d'éclairage. Cependant, d'autres types de commande sont concernés par l'invention, par exemple les commandes de volets roulants, d'alarmes, de prises de courant, de dispositifs de climatisation ou de ventilation, ou de tout autre appareil électrique ou électronique.

Le dispositif de configuration selon des modes de réalisation de l'invention peut être associé à d'autres modes de configuration notamment des types de configuration pour des commandes générales d'installation pouvant actionner des appareils dans des locaux différents.

## Revendications

1. Dispositif de communication comportant un dispositif de configuration pour installation domotique comportant des modules (18, 19) de communication reliés par des premiers moyens de communication (16), chacun desdits modules (18, 19) de communication étant associé à un organe de commande (3, 5, 8, 10) ou à un appareil électrique (4, 6, 7, 9, 11, 12),
ledit dispositif de configuration comportant :
des seconds moyens de communication comportant au moins un émetteur (14, 17, 20) de configuration susceptible d'émettre un signal (40) de rayonnement confiné dans un local (1, 2) pendant une phase de configuration et des récepteurs (15, 28, 29),
chacun desdits récepteurs étant associé à un desdits modules de communication et étant apte à recevoir ledit signal (40) de rayonnement confiné pendant ladite phase de configuration,
ledit signal de rayonnement confiné étant destiné à associer au moins un module de communication associé à un appareil électrique recevant ledit signal de rayonnement avec au moins un module de communication associé à un organe de commande correspondant à cet appareil électrique,
ledit dispositif de communication étant **caractérisé en ce que**:
ledit signal de rayonement confiné est confiné à un local donné, permettant ainssi à ladite association de concerner les modules de communication d'un appareil électrique et d'un organe de commande en ce même local, et **en ce que**
ledit émetteur de configuration est apte à envoyer sur les premiers moyens de communication un signal (38, 39) comportant une information représentative d'une zone de confinement lors de la configuration.

2. Dispositif de communication selon la revendication 1, **caractérisé en ce que** l'émetteur (14, 17, 20) de configuration est connecté aux premiers moyens de communication (16) pour émettre un ordre de configuration.

3. Dispositif de communication selon l'une des revendications 1 ou 2, **caractérisé en ce que** le signal (40) de rayonnement confiné est un signal ayant une longueur d'onde proche ou dans ultraviolet.

4. Dispositif de communication selon l'une quelconque des revendications 1 à 3, **caractérisé en ce que** le signal (40) de rayonnement confiné est émis par un émetteur associé à un module de communication d'un organe de commande (3, 5, 8, 10) ou d'un appareil électrique (4, 9).

5. Dispositif de communication selon l'une quelconque des revendications 1 à 3, **caractérisé en ce que** le signal (40) de rayonnement confiné est émis par un émetteur (17, 20) portatif ou amovible.

6. Dispositif de communication selon l'une quelconque des revendications 1 à 5, **caractérisé en ce que** des modules (18, 19) de communication sont pré-configurés et la phase de configuration avec un émetteur (14, 17, 20) de configuration termine la configuration à l'intérieur d'une zone (1, 2) de confinement.

7. Installation électrique comportant un dispositif de communication selon l'une quelconque des revendications 1 à 6.

8. Installation électrique comportant :
un dispositif de communication comportant des modules de communication reliés par des premiers moyens de communication (16), chacun desdits modules de communication (18, 19) etant associé à un organe de commande (3, 5, 8, 10) ou à un apparail électrique (4, 6, 7, 9, 11, 12), et
des récepteurs (15, 28, 29), chacun desdits récepteurs étant associé à un desdits modules de communicatiom et étant apte à recevoir un signal (40) de rayonnement confiné,
ladite installation électrique étant adaptée pour être configurée par au moins un dispositif de communication selon l'une quelconque des revendications 1 à 6.

9. Procédé de configuration d'une installation domotique comportant des premiers modules (18, 19) de communication reliés par des premiers moyens de communication (16), chacun desdits modules (18, 19) de communication étant associé à un organe de commande (3, 5, 8, 10) ou à un appareil électrique (4, 6, 7, 9, 11, 12), ledit procédé de configuration comportant :
- une étape de commande de l'émission d'un signal (40) de rayonnement confiné émis par un émetteur (14, 17, 20) de configuration sur des seconds moyens de communication,
- une étape de réception du signal (40) de rayonnement confiné par des seconds modules de communication, le procédé de configuration étant **caractérisé en ce que** ledit signal (40) de rayonnement confiné est confiné à un local donné, **en ce que** lesdits seconds modules de communication sont les premiers modules (18, 19) de communication se trouvant dans ledit local, et **en ce que** ledit procédé de configuration comporte également:
- une étape d'envoi par l'émetteur (14, 17, 20) de configuration sur les premiers moyens de communication (16) d'un signal d'identification (38, 39) dudit local, et
- une étape de mémorisation (30, 31) dans des modules (18, 19) de communication d'une information (24, 38, 39) d'identification de local faisant partie dudit signal d'identification (38, 39).

## Claims

1. Communication device comprising a configuration device for a home automation installation comprising communication modules (18, 19) connected by first communication means (16), each of said communication modules (18, 19) being associated with a control device (3, 5, 8, 10) or with an electrical appliance (4, 6, 7, 9, 11, 12), said configuration device comprising second communication means comprising at least one configuration transmitter (14, 17, 20) able to emit a confined radiation signal (40) in a room (1, 2) during a configuration phase and receivers (15, 28, 29), each of said receivers being associated with one of said communication modules and being able to receive said confined radiation signal (40) during said configuration phase, said confined radiation signal being designed to associate at least one communication module associated with an electrical appliance receiving said radiation signal with at least one communication module associated with a control device corresponding to this electrical appliance, said communication device being **characterized in that**:
said confined radiation signal is confined to a given room, thus enabling said association to concern the communication modules of an electrical appliance and of a control device of this same room, and that
said configuration transmitter is able to send the first communication means a signal (38, 39) containing information representative of a confinement area when configuration is performed.

2. Communication device according to claim 1, **characterized in that** the configuration transmitter (14, 17, 20) is connected to the first communication means (16) to emit a configuration order.

3. Communication device according to either one of the claims 1 or 2, **characterized in that** the confined radiation signal (40) is a signal having a wavelength close to or in the ultraviolet.

4. Communication device according to any one of the claims 1 to 3, **characterized in that** the confined radiation signal (40) is emitted by a transmitter associated with a communication module of a control device (3, 5, 8, 10) or of an electrical appliance (4, 9).

5. Communication device according to any one of the claims 1 to 3, **characterized in that** the confined radiation signal (40) is emitted by a portable or removable transmitter (17, 20).

6. Communication device according to any one of the claims 1 to 5, **characterized in that** communication modules (18, 19) are pre-configured and the configuration phase with a configuration transmitter (14, 17, 20) terminates configuration within a confinement area (1, 2).

7. Electrical installation comprising a communication device according to any one of the claims 1 to 6.

8. Electrical installation comprising:
- a communication device comprising communication modules connected by first communication means (16), each of said communication modules (18, 19) being associated with a control device (3, 5, 8, 10) or with an electrical appliance (4, 6, 7, 9, 11, 12), and
- receivers (15, 28, 29), each of said receivers being associated with one of said communication modules and being able to receive a confined radiation signal (40), said electrical installation being arranged so as to be configured by at least one communication device according to any one of the claims 1 to 6.

9. Method of configuring a home automation installation comprising first communication modules (18, 19) connected by first communication means (16), each of said communication modules (18, 19) being associated with a control device (3, 5, 8, 10) or with an electrical appliance (4, 6, 7, 9, 11, 12), said method of configuring comprising:
- a step of commanding emission of a confined radiation signal (40) emitted by a configuration transmitter (14, 17, 20) to second communication means,
- a step of receipt of the confined radiation signal (40) by second communication modules, the method of configuring being **characterized in that** said confined radiation signal (40) is confined to a given room, that said second communication modules are the first communication modules (18, 19) located in said room, and that said method of configuring also comprises:
- a step of sending, by the configuration transmitter (14, 17, 20) to the first communication means (16), of an identification signal (38, 39) of said room, and
- a step of storing (30, 31) area identification information (24, 38, 39) forming part of said identification signal (38, 39) in communication modules (18, 19).

## Patentansprüche

1. Kommunikationseinrichtung mit einer Konfigurationseinrichtung für eine Gebäudesysteminstallation mit über erste Kommunikationsmittel (16) miteinander verbundenen Kommunikationsmodulen (18, 19), welche genannten Kommunikationsmodule (18, 19) je einem Steuerorgan (3, 5, 8, 10) oder einem Elektrogerät (4, 6, 7, 9, 11, 12) zugeordnet sind,
wobei die genannte Konfigurationseinrichtung
zweite Kommunikationsmittel mit mindestens einem Konfigurationssender (14, 17, 20), der dazu dient, in einer Konfigurationsphase ein auf einen Raum (1, 2) begrenztes Strahlungssignal (40) auszusenden, sowie mit Empfängern (15, 28, 29) umfasst und jeder der genannten Empfänger einem der genannten Kommunikationsmodule zugeordnet und in der Lage ist, während der genannten Konfigurationsphase das genannte räumlich begrenzte Strahlungssignal (40) zu empfangen,
wobei das räumlich begrenzte Strahlungssignal dazu dient, mindestens ein Kommunikationsmodul, das einem das genannte Strahlungssignal empfangenden Elektrogerät zugeordnet ist, mindestens einem Kommunikationsmodul zuzuordnen, das einem Steuerorgan für dieses Elektrogerät zugeordnet ist,
welche Kommunikationseinrichtung **dadurch gekennzeichnet ist, dass**
das genannte räumlich begrenzte Strahlungssignal auf einen bestimmten Raum begrenzt ist, so dass die genannte Zuordnung zwischen den Kommunikationsmodulen eines Elektrogeräts und eines im gleichen Raum installierten Steuerorgans erfolgen kann, und **dadurch** dass
der genannte Konfigurationssender in der Lage ist, bei Durchführung der Konfiguration ein Signal (38, 39) über die ersten Kommunikationsmittel zu treiben, das eine einen Begrenzungsbereich abbildende Information enthält.

2. Kommunikationseinrichtung nach Anspruch 1, **dadurch gekennzeichnet, dass** der Konfigurationssender (14, 17, 20) an die ersten Kommunikationsmittel (16) angeschlossen wird, um ein Kommunikationssignal auszusenden.

3. Kommunikationseinrichtung nach einem der Ansprüche 1 oder 2, **dadurch gekennzeichnet, dass** das räumlich begrenzte Strahlungssignal (40) ein Signal mit einer Wellenlänge in der Nähe des oder innerhalb des Ultraviolettbandes ist.

4. Kommunikationseinrichtung nach irgendeinem der Ansprüche 1 bis 3, **dadurch gekennzeichnet, dass** das räumlich begrenzte Strahlungssignal (40) von einem Sender ausgesandt wird, der einem Kommunikationsmodul eines Steuerorgans (3, 5, 8, 10) oder eines Elektrogeräts (4, 9) zugeordnet ist.

5. Kommunikationseinrichtung nach irgendeinem der Ansprüche 1 oder 3, **dadurch gekennzeichnet, dass** das räumlich begrenzte Strahlungssignal (40) von einem tragbaren oder abnehmbaren Sender (17, 20) ausgesandt wird.

6. Kommunikationseinrichtung nach irgendeinem der Ansprüche 1 bis 5, **dadurch gekennzeichnet, dass** die Kommunikationsmodule (18, 19) vorkonfiguriert sind und die Konfigurationsphase mit Hilfe des Konfigurationssenders (14, 17, 20) die Konfiguration in einem bestimmten Begrenzungsbereich (1, 2) abschließt.

7. Elektroinstallation mit einer Kommunikationseinrichtung nach irgendeinem der Ansprüche 1 bis 6.

8. Elektroinstallation, die
eine Kommunikationseinrichtung mit über erste Kommunikationsmittel (16) miteinander verbundenen Kommunikationsmodulen (18, 19), welche genannten Kommunikationsmodule (18, 19) je einem Steuerorgan (3, 5, 8, 10) oder einem Elektrogerät (4, 6, 7, 9, 11, 12) zugeordnet sind, sowie mit Empfängern (15, 28, 29) umfasst, wobei jeder der genannten Empfänger einem der genannten Kommunikationsmodule zugeordnet und in der Lage ist, ein räumlich begrenztes Strahlungssignal (40) zu empfangen, und die genannte Installation dazu ausgelegt ist, über mindestens eine Kommunikationseinrichtung nach irgendeinem der Ansprüche 1 bis 6 konfiguriert zu werden.

9. Verfahren zur Konfiguration einer Gebäudesysteminstallation mit über erste Kommunikationsmittel (16) miteinander verbundenen Kommunikationsmodulen (18, 19), welche genannten Kommunikationsmodule (18, 19) je einem Steuerorgan (3, 5, 8, 10) oder einem Elektrogerät (4, 6, 7, 9, 11, 12) zugeordnet sind, wobei das genannte Konfigurationsverfahren
- einen Steuerschritt, in dem die Aussendung eines von einem Konfigurationssender (14, 17, 20) über zweite Kommunikationsmittel ausgesandten räumlich begrenzten Strahlungssignals (40) veranlasst wird,
- und einen Empfangsschritt umfasst, in dem das räumlich begrenzte Strahlungssignal (40) von zweiten Kommunikationsmitteln empfangen wird, **dadurch gekennzeichnet dass** das genannte räumlich begrenzte Strahlungssignal (40) auf einem bestimmten Raum begrenzt ist, dass die genannten zweiten Kommunikationsmittel durch die im genannten Raum installierten ersten Kommunikationsmittel (18, 19) gebildet werden und dass das genannte Konfigurationsverfahren ebenfalls
- einen Sendeschritt, in dem der Konfigurationssender (14, 17, 20) über die ersten Kommunikationsmittel (16) ein Kennsignal (38, 39) zur Identifikation des genannten Raums aussendet, sowie
- einen Speicherschritt (30, 31) umfasst, in dem in Kommunikationsmodulen (18, 19) eine Information zur Raumidentifikation (24, 38, 39) gespeichert wird, die in dem genannten Kennsignal (38, 39) enthalten ist.
